# EUROPÄISCHE PATENTSCHRIFT

(11) **EP 2 275 675 B1**
(45) Veröffentlichungstag und Bekanntmachung des Hinweises auf die Patenterteilung: **29.08.2018**
(21) Anmeldenummer: 10182943.0
(22) Anmeldetag: 31.03.2001
(51) Int. Cl.: F03D 7/04, F03D 9/00, H02G 3/38

(54) **Verfahren zum Betreiben einer Windenergieanlage sowie Windenergieanlage**
Wind energy plant and method for operating a wind energy plant
Installation à énergie éolienne et procédé d'utilisation

(30) Priorität: 11.05.2000 DE 10022974
(43) Veröffentlichungstag der Anmeldung: 19.01.2011
(62) Teilanmeldung aus: 03008602.9
(73) Patentinhaber: Wobben Properties GmbH, 26607 Aurich (DE)
(72) Erfinder: Wobben, Aloys, 26607 Aurich (DE)
(74) Vertreter: Eisenführ Speiser

(56) Entgegenhaltungen:
- DE-A1- 19 756 777
- DE-U1- 29 621 449
- GB-A- 2 330 256
- US-A- 4 189 648
- US-A- 5 225 712
- US-A- 5 907 192
- G. BERGAUER, L FICKERT: "Frquenzabhängige Massnahmen zur Vermeidung von Grossstörungen bzw. zur Verminderung ihrer Auswirkungen", VEÖ JOURNAL, Bd. 1-2, Februar 1998 (1998-02), Seiten 74-77, XP002720188, Wien
- HEIER: "Windkraftanlagen im Netzbetrieb", 1996, TEUBNER, 1996, XP002259148, * Seite 312 - Seite 335 *
- LYONS J P ET AL: "THE CONTROL OF VARIABLE-SPEED WIND TURBINE GENERATORS", PROCEEDINGS OF THE IEEE CONFERENCE ON DECISION AND CONTROL,XX,XX, Bd. 3, 14. Dezember 1983 (1983-12-14), Seiten 1417-1421, XP000612992,
- HEIER: "Windkraftanlagen im Netzbetrieb", 1996, TEUBNER, 1996, XP002259147, * Seite 310 - Seite 312 *
- ERINMEZ I A ET AL: "NGC experience with frequency control in England and Wales-provision of frequency response by generators", POWER ENGINEERING SOCIETY 1999 WINTER MEETING, IEEE NEW YORK, NY, USA 31 JAN.-4 FEB. 1999, PISCATAWAY, NJ, USA,IEEE, US, vol. 1, 31 January 1999 (1999-01-31), pages 590-596, XP010321233, ISBN: 978-0-7803-4893-6

## Beschreibung

Die vorliegende Erfindung betrifft ein Verfahren zum Betreiben einer Windenergieanlage mit einem von einem Rotor antreibbaren elektrischen Generator zum Abgeben elektrischer Leistung an ein elektrisches Netz, dem die Windenergieanlage angeschlossen ist. Die Erfindung betrifft ferner eine Windenergieanlage mit einem Rotor und einem mit dem Rotor gekoppelten elektrischen Generator zum Abgeben elektrischer Leistung an einen elektrischen Verbraucher, insbesondere ein elektrisches Netz.

Bei schwachen elektrischen (Insel-)Netzen steigt die Netzfrequenz sehr schnell (schlagartig) an, wenn ein größerer Verbraucher vom elektrischen Netz getrennt wird. Die Antriebsmaschinen, wie z. B. Dieselmotoren, Wasserräder usw. benötigen einige Zeit, um dann ihre (mechanische und elektrische) Leistung zu reduzieren. Während dieser Zeit erzeugen diese Generatoren mehr Energie als vom elektrischen Netz entnommen wird. Diese Energie wird dann für die Beschleunigung der Generatoren verbraucht. Damit steigt die Drehzahl und somit auch die Netzfrequenz an.

Da viele elektrische Geräte, z. B. Computer, Elektromotoren und dergleichen, die an das elektrische Netz angeschlossen sind, jedoch nicht auf schwankende Netzfrequenzen bzw. deren schlagartige Änderungen ausgelegt sind, kann dieses zu Schäden an elektrischen Maschinen bis zur Zerstörung dieser Maschinen führen.

Als Stand der Technik wird hingewiesen auf das Dokument DE 197 56 777, welches ein Verfahren zum Betreiben einer Windenergieanlage offenbart und bei welcher vorgeschlagen wird, dass die Leistung einer Windenergieanlage herunterzuregeln, falls die Spannung im Netz einen bestimmten Wert überschreitet. Das Dokument "Frequenzabhängige Maßnahmen zur Vermeidung von Großstörungen bzw. zur Verminderung ihrer Auswirkungen", G. Bergauer, L. Fickert, VEÖ JOURNAL, Bd. 1-2, Februar 1998 (1998-02), Seiten 74-77, Wien, offenbart das Verhalten von Kraftwerken, die über Primärregelreserven, eine Sekundärregelung und eine Terziärregelung verfügen. Das Dokument US 4,189,648 offenbart einen Windenergiegenerator üblicher Bauart. Aus der Offenbarung "Windkraftanlagen im Netzbetrieb", Dr. S. Heier , B.G. Teubner Stuttgart, 1996, Seiten 310-347 ist ein Verfahren und eine Windenergieanlage mit den Merkmalen des Oberbegriffs der unabhängigen Ansprüchen bekannt. Diese Offenbarung wird als nächstliegender Stand der Technik betrachtet.

Der Erfindung liegt die Aufgabe zu Grunde, die vorbeschriebenen Probleme zu beseitigen, wenn Windenergieanlagen an dem elektrischen Netz angeschlossen sind.

Erfindungsgemäß wird diese Lösung durch ein Verfahren mit den Merkmalen nach Anspruch 1 sowie eine Windenergieanlage mit dem Merkmal nach Anspruch 2 gelöst. Vorteilhafte Weiterbildungen sind in den Unteransprüchen beschrieben.

Erfindungsgemäß wird vorgeschlagen, falls Windenergieanlagen an solchen schwachen Netzen betrieben werden, deren (mechanische und) elektrische Leistung in Abhängigkeit der steigenden Netzfrequenz zu steuern. Damit soll ein weiterer Anstieg der Netzfrequenz verhindert werden bzw. eine Reduktion der Netzfrequenz erreicht werden.

Die Erfindung ist nachfolgend anhand eines Ausführungsbeispiels näher erläutert:
Es zeigen:
- Fig. 1: ein Frequenz-/Leistungszeitdiagramm einer Windenergieanlage,
- Fig. 2: Seitenansicht einer Windenergieanlage,
- Fig. 3: ein Blockschaltdiagramm eines mit einem Mikroprozessor gesteuerten Wechselrichters einer Windenergieanlage,
- Fig. 4: Darstellung einer Regelungseinrichtung einer Windkraftanlage,
- Fig. 5: Darstellung einer Ankopplung einer Windenergieanlage an ein elektrisches Netz,
- Fig. 6: Alternativdarstellung zu Fig. 3.

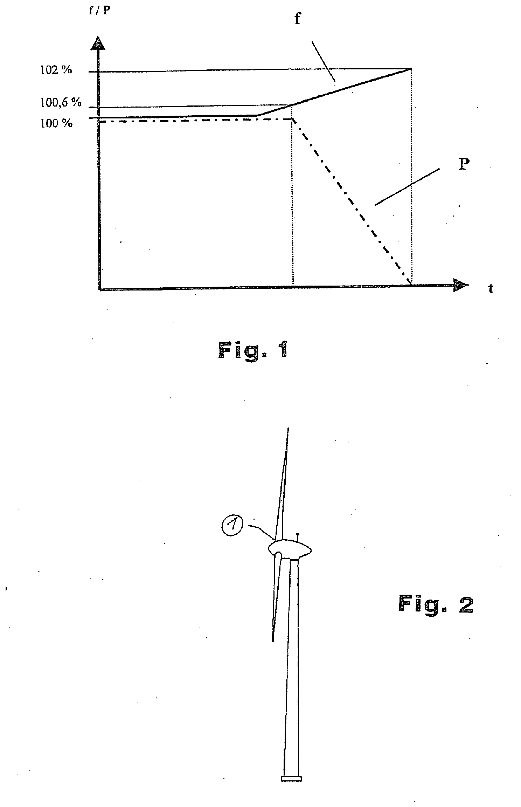

Fig. 1 zeigt die Anforderung an eine Windenergieanlage, ihre Ausgangsleistung P in Abhängigkeit der elektrischen Frequenz f des Netzes zu reduzieren. Der Wert von 100 % stellt dabei die Sollfrequenz (50 Hz, 60 Hz) des elektrischen Netzes dar. Die Werte 100,6 % bzw. 102 % sind entsprechend höhere Werte der Netzfrequenz f.

Die elektrische Leistung der Windenergieanlage wird z.B. bei einem Anstieg der Netzfrequenz um 0,6 % (also auf 100,6 %) noch nicht heruntergeregelt. Steigt danach die Netzfrequenz noch weiter an, wird die elektrische Leistung der Windenergieanlage heruntergeregelt. Im gezeigten Beispiel wird die elektrische Leistung der Windenergieanlage bei einem Anstieg der Netzfrequenz auf 102 % auf Null Leistung heruntergeregelt.

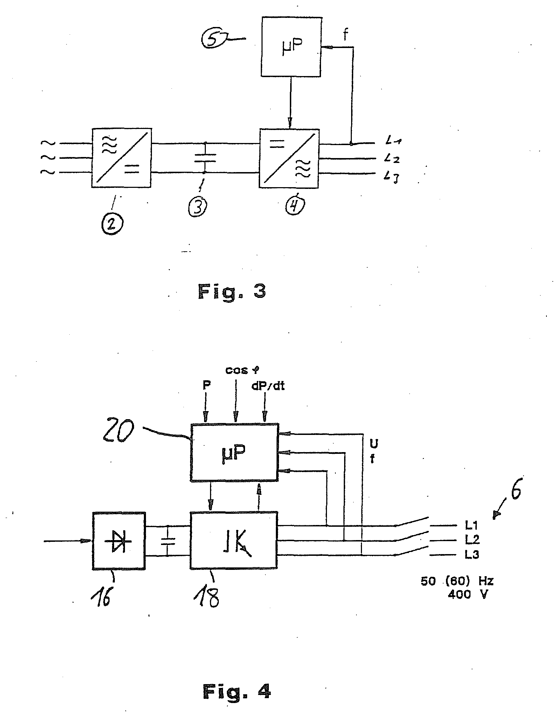

Fig. 3 zeigt ein Ausführungsbeispiel einer Windenergieanlage, die dieser Anforderung gerecht wird. Die Windenergieanlage hat verstellbare Rotorblätter (Pitch-Regelung der Rotorblätter), damit die mechanische Leistung der Windenergieanlage abgeregelt werden kann. Wird beispielsweise der Anstellwinkel der Rotorblätter zum Wind verstellt, kann auch die Kraft auf die Rotorblätter auf einen gewünschten Wert verringert werden. Der elektrische Wechselstrom des Generators (nicht dargestellt), welcher mit dem Rotor, der die Rotorblätter trägt, verbunden ist, wird mittels eines Gleichrichters 2 gleichgerichtet und mittels eines Kondensators 3 geglättet. Der Wechselrichter 4 formt die Gleichspannung dann in einen Wechselstrom um, der an das Netz L₁, L₂, L₃ abgegeben wird. Die Frequenz dieses Ausgangsstromes wird vom Netz vorgegeben. Die Regelungseinrichtung 5, bestehend aus einem Mikroprozessor, misst die Netzfrequenz und steuert die Leistungsschalter des Wechselrichters derart, dass die Ausgangsfrequenz der Netzspannung (Netzfrequenz) entspricht. Steigt die Netzfrequenz - wie oben beschrieben - an, wird die elektrische Leistung - wie in Fig. 1 dargestellt - heruntergeregelt.

Fig. 4 veranschaulicht die erfindungsgemäße Regelungseinrichtung. Der schematisch dargestellte Rotor 4 der Windenergieanlage ist mit einem Generator G gekoppelt, der eine elektrische Leistung bereitstellt, die von der Windgeschwindigkeit und somit der Windleistung abhängt. Die von dem Generator G erzeugte Wechselspannung wird mittels des Wechselrichters zunächst gleichgerichtet und anschließend in eine Wechselspannung umgewandelt, die eine der Netzfrequenz entsprechende Frequenz aufweist. Mit Hilfe des Netzfrequenzaufnehmers wird die Netzspannung am Netzeinspeisungspunkt des Netzes ermittelt. Sobald die Netzfrequenz einen vorbestimmten Wert - siehe Fig. 1 - übersteigt, wird die elektrische abgegebene Leistung reduziert, um einem weiteren Ansteigen der Netzfrequenz entgegenzuwirken. Mit Hilfe der Regelungseinrichtung wird mithin die Netzfrequenz des Netzes auf einen gewünschten Netzfrequenzwert eingeregelt, zumindest wird ihr weiterer Anstieg vermieden.

Durch eine derartig geregelte Einspeisung der von der Windenergieanlage abgegebenen Leistung können Netzfrequenzschwankungen vermieden bzw. erheblich reduziert werden.

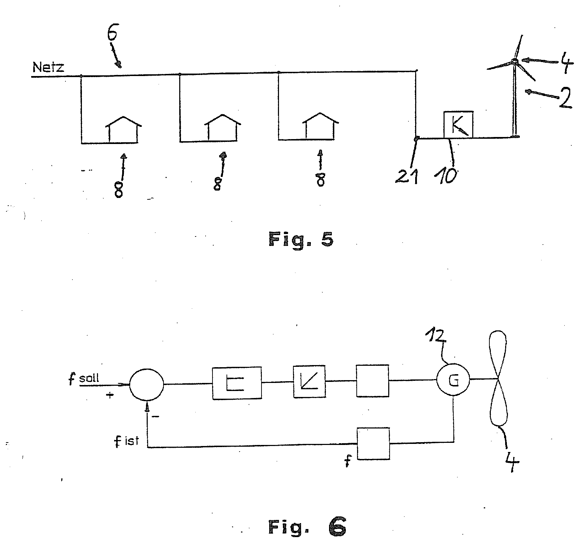

Fig. 5 zeigt die Ankopplung einer Windenergieanlage an ein elektrisches Netz, wobei die von der Windenergieanlage erzeugte elektrische Leistung am Netzeinspeisungspunkt in das Netz abgegeben wird. Am elektrischen Netz hängen mehrere Verbraucher, im dargestellten Beispiel als Häuser skizziert.

Fig. 6 zeigt wesentliche Bestandteile der Steuer-Regelungseinrichtung in etwas anderer Darstellung als in Fig. 3. Die Steuer- und Regelungsanordnung weist einen Gleichrichter auf, in dem die in dem Generator erzeugte Wechselspannung gleichgerichtet wird. Ein mit dem Gleichrichter verbundener Frequenzumrichter wandelt die zunächst im Zwischenkreis gleichgerichtete Gleichspannung in eine Wechselspannung um, die als dreiphasige Wechselspannung über die Leitung L₁, L₂ und L₃ in das Netz eingespeist wird. Der Frequenzumrichter wird mit Hilfe des Mikrocomputers, der Teil der gesamten Regelungseinrichtung ist, gesteuert. Hierzu ist der Mikroprozessor mit dem Frequenzumrichter gekoppelt. Als Eingangsgrößen für die Regelung der Spannung, mit der die von der Windenergieanlage 2 zur Verfügung gestellten elektrischen Leistung in das Netz eingespeist wird, sind die aktuelle Netzspannung, die Netzfrequenz f, die elektrische Leistung P des Generators, der Blindleistungsfaktor cos _ sowie der Leistungsgradient dP/dt verwendet. In dem Mikroprozessor wird die erfindungsgemäße Regelung der einzuspeisenden Spannung mit ihrer gewünschten Netzfrequenz verwirklicht.

Nachfolgend eine Liste weiterer Ausführungsformen der Erfindung
Ausführungsform 1 Verfahren zum Betreiben einer Windenergieanlage mit einem Generator zum Abgeben elektrischer Leistung an ein elektrisches Netz,
   dadurch gekennzeichnet, dass die von dem Generator an das Netz abgegebene Leistung in Abhängigkeit der Netzfrequenz des elektrischen Netzes geregelt bzw. eingestellt wird.
Ausführungsform 2 Verfahren nach Ausführungsform 1,
   dadurch gekennzeichnet, dass die von dem Generator abgegebene, in das Netz eingespeiste Leistung verringert wird, wenn die Netzfrequenz des elektrischen Netzes einen vorbestimmten Wert übersteigt.
Ausführungsform 3 Verfahren nach Ausführungsform 2,
   dadurch gekennzeichnet, dass die eingespeiste Leistung der Windenergieanlage verringert wird, wenn die Netzfrequenz mehr als 3 ‰, vorzugsweise 6 %o über ihrem Sollwert liegt.
Ausführungsform 4 Windenergieanlage zur Durchführung des Verfahrens nach einer der vorhergehenden Ausführungsformen, mit einem Rotor und einem mit dem Rotor gekoppelten elektrischen Generator zum Abgeben elektrischer Leistung an ein elektrisches Netz, gekennzeichnet durch eine Regelungseinrichtung mit einem Frequenzaufnehmer zum Messen der Frequenz der am Netz anliegenden elektrischen Spannung (Strom), und dass die von dem Generator an das Netz abgegebene Leistung in Abhängigkeit der vom Frequenzaufnehmer gemessenen Netzfrequenz einstellbar ist.
Ausführungsform 5 Windenergieanlage nach Ausführungsform 4,
   dadurch gekennzeichnet, dass die Regelungseinrichtung einen Mikroprozessor aufweist.
Ausführungsform 6 Windenergieanlage nach Ausführungsform 5,
   dadurch gekennzeichnet, dass die Windenergieanlage einen Wechselrichter aufweist, der mit dem Mikroprozessor gekoppelt ist.
Ausführungsform 7 Windenergieanlage nach einer der vorhergehenden Ausführungsformen,
   dadurch gekennzeichnet, dass die mechanische Leistung der Windenergieanlage reduziert wird, in dem die verstellbaren Rotorblätter in den Wind angestellt werden.
Ausführungsform 8 Windenergieanlage nach einer der vorhergehenden Ausführungsformen,
   dadurch gekennzeichnet, dass die Windenergieanlage keine elektrische Leistung an das Netz abgibt, wenn die Netzfrequenz einen vorbestimmten Wert ihres Sollwertes, vorzugsweise 2 % ihres Sollwertes, übersteigt.

## Patentansprüche

1. Verfahren zum Betreiben einer Windenergieanlage mit einem Generator zum Abgeben elektrischer Leistung an ein elektrisches Netz,
**dadurch gekennzeichnet, dass** die von dem Generator an das Netz abgegebene Leistung in Abhängigkeit der Netzfrequenz des elektrischen Netzes geregelt bzw. eingestellt wird, dass die von dem Generator abgegebene, in das Netz eingespeiste Leistung verringert wird, wenn die Netzfrequenz des elektrischen Netzes einen vorbestimmten Wert übersteigt, wobei der vorbestimmte Wert mehr als 3‰, vorzugweise 6%o über ihrem Sollwert liegt, wobei die Windenergieanlage zur Abregelung der mechanischen Leistung eine Pitchregelung der Rotorblätter der Windenergieanlage aufweist und der Generator der Windenergieanlage einen elektrischen Wechselstrom erzeugt und der Generator mit dem Rotor, der die Rotorblätter trägt, verbunden ist und der vom Generator erzeugte elektrische Wechselstrom mittels eines Gleichrichters (2) gleichgerichtet und mittels eines Kondensators (3) geglättet wird und mittels eines Wechselrichters (4) die Gleichspannung in einen Wechselstrom umgeformt wird, welcher an das Netz abgegeben wird, wobei eine Regelungseinrichtung (5) vorgesehen ist, bestehend aus einem Mikroprozessor, welcher die Netzfrequenz misst und Leistungsschalter des Wechselrichters derart steuert, dass die Ausgangsfrequenz der Netzfrequenz entspricht.

2. Windenergieanlage zur Durchführung des Verfahrens nach Anspruch 1,
mit einem Rotor und einem mit dem Rotor gekoppelten elektrischen Generator zum Abgeben elektrischer Leistung an ein elektrisches Netz, wobei eine Regelungseinrichtung mit einem Frequenzaufnehmer zum Messen der Frequenz der am Netz anliegenden elektrischen Spannung (Strom) vorgesehen ist und dass die von dem Generator an das Netz abgegebene Leistung in Abhängigkeit der vom Frequenzaufnehmer gemessenen Netzfrequenz einstellbar ist, wobei die Windenergieanlage einen Gleichrichter (2) und einen Kondensator (3), einen Wechselrichter (4) und eine Regelungseinrichtung (5) aufweist, wobei der Gleichrichter (2) mit dem Generator verbunden ist und den elektrischen Wechselstrom des Generators gleichrichtet, wobei der Kondensator (39 zwischen dem Gleichrichter (2) und dem Wechselrichter (4) geschaltet ist und der Wechselrichter (4) mit der Regelungseinrichtung (5) gekoppelt ist und von dieser gesteuert wird und der Wechselrichter (4) ausgangsseitig mit dem Netz (6) verbunden ist und die elektrische Leistung der Windenergieanlage in das Netz einspeist..

3. Windenergieanlage nach Anspruch 2,
**dadurch gekennzeichnet, dass** die Regelungseinrichtung (5) einen Mikroprozessor (20) aufweist, welcher als Eingangsgrößen die aktuelle Netzspannung, die Netzfrequenz (f), die elektrische Leistung (P) des Generators der Windenergieanlage, den Blindleistungsfaktor (coscp) sowie den Leistungsgradienten (dP/dt) vorsieht.

## Claims

1. A method of operating a wind power installation having a generator for delivering electrical power to an electrical network **characterised in that** the power delivered to the network by the generator is regulated or adjusted in dependence on the network frequency of the electrical network, the electrical power delivered by the generator and fed into the network is reduced if the network frequency of the electrical network exceeds a predetermined value, wherein the predetermined value is more than 3 ‰, preferably 6 ‰ above its reference value, wherein the wind power installation for regulating the mechanical power down has pitch regulation of the rotor blades of the wind power installation and the generator of the wind power installation generates an alternating electrical current and the generator is connected to the rotor which carries the rotor blades and the alternating electrical current generated by the generator is rectified by means of a rectifier (2) and smoothed by means of a capacitor (3) and by means of an inverter (4) the direct current voltage is converted into an alternating current which is delivered to the network, wherein there is provided a regulating device (5) comprising a microprocessor which measures the network frequency and controls power switches of the inverter in such a way that the output frequency corresponds to the network frequency.

2. A wind power installation for carrying out the method according to claim 1 comprising a rotor and an electrical generator coupled to the rotor for delivering electrical power to an electrical network, wherein there is provided a regulating device having a frequency pick-up for measuring the frequency of the electrical voltage at the network (current) and the power delivered to the network by the generator is adjustable in dependence on the network frequency measured by the frequency pick-up, wherein the wind power installation has a rectifier (2) and a capacitor (3), an inverter (4) and a regulating device (5), where the rectifier (2) is connected to the generator and rectifies the alternating electrical current from the generator, wherein the capacitor (3) is connected between the rectifier (2) and the inverter (4) and the inverter (4) is coupled to the regulating device (5) and is controlled thereby and the inverter (4) is connected at the output side to the network (6) and feeds the electrical power of the wind power installation into the network.

3. A wind power installation according to claim 2
**characterised in that** the regulating device (5) has a microprocessor (20) which as input parameters provides the present network voltage, the network frequency (f), the electrical power (P) of the generator of the wind power installation, the reactive power factor (cos ϕ) and the power gradient (dP/dt).

## Revendications

1. Procédé de fonctionnement d'une installation à énergie éolienne comportant un générateur pour délivrer une puissance électrique à un réseau électrique,
**caractérisé en ce que** la puissance délivrée au réseau par le générateur est réglée ou ajustée en fonction de la fréquence de réseau du réseau électrique, que la puissance délivrée par le générateur, injectée dans le réseau, est réduite lorsque la fréquence de réseau du réseau électrique dépasse une valeur prédéterminée, dans lequel la valeur prédéterminée se situe à plus de 3 ‰, de préférence de 6 ‰ au-dessus de sa valeur théorique, dans lequel l'installation d'énergie éolienne présente, pour la régulation de la puissance mécanique, un réglage de pas des pales du rotor de l'installation à énergie éolienne et le générateur de l'installation à énergie éolienne génère un courant électrique alternatif et le générateur est relié au rotor qui porte les pales de rotor et le courant électrique alternatif généré par le générateur est redressé au moyen d'un redresseur (2) et lissé au moyen d'un condensateur (3) et, au moyen d'un ondulateur (4), la tension continue est convertie en un courant alternatif qui est délivré dans le réseau, dans lequel un système de réglage (5) est prévu, consistant en un microprocesseur qui mesure la fréquence de réseau et commande un disjoncteur de l'ondulateur de telle sorte que la fréquence de départ corresponde à la fréquence de réseau.

2. Installation à énergie éolienne pour la réalisation du procédé selon la revendication 1, avec un rotor et un générateur électrique couplé au rotor pour délivrer une puissance électrique à un réseau électrique, dans laquelle un système de réglage doté d'un capteur de fréquence pour mesurer la fréquence de la tension (courant) électrique appliquée au réseau est prévu et la puissance délivrée par le générateur dans le réseau peut être réglée en fonction de la fréquence de réseau mesurée par le capteur de fréquence, dans laquelle l'installation à énergie éolienne présente un redresseur (2) et un condensateur (3), un ondulateur (4) et un système de réglage (5), dans laquelle le redresseur (2) est relié au générateur et redresse le courant électrique alternatif du générateur, dans laquelle le condensateur (39) est monté entre le redresseur (2) et l'ondulateur (4) et l'ondulateur (4) est couplé au système de réglage (5) et est commandé par celui-ci et l'ondulateur (4) est relié au réseau (6) du côté de la sortie et la puissance électrique de l'installation à énergie éolienne est injectée dans le réseau.

3. Installation à énergie éolienne selon la revendication 2,
**caractérisée en ce que** le système de réglage (5) présente un microprocesseur (20) qui prévoit, comme valeur d'entrée, la tension de réseau actuelle, la fréquence de réseau (f), la puissance électrique (P) du générateur de l'installation à énergie éolienne, le facteur de puissance réactive (cosϕ) ainsi que le gradient de puissance (dP/dt).
